# EUROPÄISCHE PATENTSCHRIFT

(11) **EP 0 390 062 B1**
(45) Veröffentlichungstag und Bekanntmachung des Hinweises auf die Patenterteilung: **25.05.1994**
(21) Anmeldenummer: 90105777.8
(22) Anmeldetag: 27.03.1990
(51) Int. Cl.: F16B 37/02, F16B 37/04

(54) **Klammerartige Blechmutter für automatische Montage**
Clamp shaped sheet metal nut for automatic assembly
Ecrou en tôle formant une pince pour montage automatique

(30) Priorität: 31.03.1989 DE 3910423
(43) Veröffentlichungstag der Anmeldung: 03.10.1990
(73) Patentinhaber: A. Raymond GmbH & Co. KG, D-79539 Lörrach (DE)
(72) Erfinder: Müller, Klaus, D-7857 Weil-Haltingen (DE); Motsch, Uwe, D-7888 Rheinfelden (DE); Mack, Gerhard, D-7888 Rheinfelden (DE)
(74) Vertreter: Kirchgaesser, Johannes, Dipl.-Ing.

(56) Entgegenhaltungen:
- EP-A- 0 224 746
- FR-A- 2 311 217
- FR-A- 2 522 747
- GB-A- 1 171 905
- US-A- 2 686 548

## Beschreibung

Die Erfindung bezieht sich auf eine klammerartige Blechmutter der im Oberbegriff angegebenen Art, welche zur automatischen Montage auf eine Trägerplatte mittels eines an die Befestigungsstelle heranführbaren Montagekopfes geeignet sein soll. Diese Blechmuttern werden in der Automobilindustrie wie auch in der Hausgeräte-Industrie und anderen Industriezweigen verwendet, um plattenförmige Bauteile mit anderen Bauteilen zu verschrauben. Die Blechmutter wird zu diesem Zweck auf den Rand einer mit einem Loch versehenen Trägerplatte geschoben, bis sich Gewinde- und Plattenloch decken.

Aus der DE-OS 35 42 841 ist eine solche Blechmutter bekannt, bei der zwecks automatischer Montage an den beiden Seitenkanten des Gewindeschenkels im rechten Winkel zur Schenkelebene Führungsstege angeformt sind, deren Oberkanten mindestens die Gewindeprägung überragen und deren zueinander parallele Oberflächen den gleichen Abstand voneinander haben wie die Seitenkanten der Klammerschenkel. Diese Blechmutter läßt sich dank der Führungsstege problemlos durch einen flexiblen Führungskanal mit rechteckigem Querschnitt auch über größere Distanzen fördern und sicher in den Haltekopf einer ebenfalls aus dieser Druckschrift bekannten Montagevorrichtung hinführen, wobei der Quersteg zwischen den beiden Schenkeln die nötige Luftangriffsfläche für die Druckluftförderung im Führungskanal bietet.
Diese bekannte Blechmutter hat sich in Verbindung mit der dazugehörigen Montagevorrichtung dort bestens bewährt, wo der Haltekopf der Montagevorrichtung frei und ungehindert an den Rand der Trägerplatte herangeführt werden kann.

Nun gibt es aber im Kraftfahrzeugbau beispielsweise bei Armaturenbrettern oder anderen komplizierten Gehäusewänden Befestigungsstellen, die nicht am Rand der Trägerplatte liegen, sondern mittendrin, wobei dem Befestigungsloch eine rechteckige Aussparung zum Einführen der klammerartigen Blechmutter vorgelagert ist. Diese Aussparung ist üblicherweise gerade so groß, daß die Blechmutter schräg von oben mit dem hängenden Klammerschenkel in die Aussparung eingeführt und dann unter den Plattenrand eingeschoben werden kann.

Aufgabe der Erfindung ist es, die klammerartige Blechmutter so zu gestalten, daß diese mittels einer entsprechend ausgebildeten Montagevorrichtung auch an solchen schwer zugänglichen Befestigungsstellen automatisch gesetzt, bzw. eingeschoben werden kann.

Diese Aufgabe wird bei der eingangs beschriebenen Blechmutter erfindungsgemäß dadurch gelöst, daß an einem der beiden Schenkel seitlich nach außen abstehende Führungsflügel angeformt sind, wobei deren Randbereiche abgerundet sind.

Aus FR - A - 2 311 217 ist zwar bereits eine Blechmutter zur sogenannten Blindbefestigung bekannt, an dessen Anlageschenkel ebenfalls seitlich nach außen abstehende Führungsflügel angeformt sind, um die Blechmutter beim Einbau in die dafür vorgesehene Öffnung zu führen und sie darin zu halten. Diese Blechmutter ist aber nicht zum Aufstecken auf den Rand einer Trägerplatte geeignet. Außerdem sind die Führungsflügel in den Randbereichen scharfkantig und - im Verhältnis zur Gesamtlänge der Blechmutter - relativ kurz ausgebildet, weil sie lediglich den Zweck haben, sich am Öffnungsrand abzustützen. Diese Blechmuttern sind nicht für das automatische Setzen in Befestigungslöchern bestimmt und aufgrund ihrer Flügelausbildung wegen der Verkantungsgefahr dazu auch nicht geeignet.

Durch die erfindungsgemäße Ausbildung der Führungsflügel wird zudem noch die Möglichkeit geboten, die Blechmutter in dem Haltekopf der Montagevorrichtung so an den Flügeln zu halten, daß ein Schenkel aus der Führungsbahn des Haltekopfes frei nach unten hängend in die Montage-Aussparung eingeführt werden kann.

Bei Verwendung von aus der DE-OS 35 42 841 bekannten klammerförmigen Blechmuttern mit seitlich am Gewindeschenkel angeformten Führungsstegen ist es nach einem weiteren Merkmal der Erfindung vorteilhaft, wenn die abstehenden Führungsflügel an den Oberkanten der Führungsstege parallel zur Ebene des Gewindeschenkels angeformt sind. Dadurch befinden sich die Führungsflügel in einer Höhe über dem Gewindeschenkel, welche mehr Platz für die Ausbildung der seitlichen Führungswände im Führungskanal bietet und außerdem dank der Führungsstege auch eine optimale Einbettung im Führungskanal ermöglicht.

Benutzt man dagegen die aus der DE-OS 35 36 473 bekannten klammerartigen Blechmuttern mit Sicherungsschenkel über dem Gewindeschenkel, so besteht hierbei in weiterer Ausgestaltung der Erfindung die vorteilhafte Möglichkeit, die Führungsflügel an den Außenstegen des Sicherungsschenkels anzuformen, so daß bei dem für die Herstellung notwendigen Blechband nur noch die Zuschnittbreite für die Flügel berücksichtigt werden müssen und daher gegenüber der vorgenannten Ausführungsform mit Führungsstegen eine wesentlich geringere Blechbandbreite benötigt wird.

Dieser Gesichtspunkt der Materialersparnis kommt noch mehr zum Tragen, wenn in Weiterbildung der vorgenannten Gestaltungsmerkmale darauf geachtet wird, daß die Außenkanten der Führungsflügel parallel zueinander verlaufen und den gleichen Abstand haben wie die Seitenkanten des Gewindeschenkels und des Klammerschenkels. Dadurch bekommt der Sicherungsschenkel mit den Flügeln die gleiche Breite wie die beiden anderen Schenkel, so daß keine zusätzlichen Stanzabfallstreifen anfallen. Überdies ergibt sich noch der weitere Vorteil, daß der für den Transport der Blechmutter zur Montagevorrichtung benötigte flexible Führungsschlauch einen der Außenkontur der Blechmutter angepaßten rechteckigen Querschnitt erhalten kann, weil die Führungsrillen nur im Bereich des Haltekopfes benötigt werden, was die Herstellung des Führungsschlauches vereinfacht und dessen Führungsverhalten auch bei stärkerer Krümmung sicherstellt.

Die in den Ansprüchen angegebene Ausbildungsformen der Erfindung sind in der Zeichnung dargestellt und sollen nachfolgend näher erläutert werden. Es zeigt
- Fig. 1: eine bevorzugte Ausführungsform der erfindungsgemäßen Blechmutter in einer vergrößerten Seitenansicht,
- Fig. 2: die Blechmutter in Vorderansicht,
- Fig. 3: die gleiche Blechmutter in Draufsicht,
- Fig. 4: die gleiche Blechmutter in perspektivischer Darstellung,
- Fig. 5: eine für die Blechmutter vorgesehene Befestigungsstelle im Schnitt und in Draufsicht,
- Fig. 6: eine andere Befestigungsstelle im Schnitt und in Draufsicht,
- Fig. 7: einen Haltekopf einer zum Setzen der Blechmutter geeigneten Montagevorrichtung mit Teilschnitt durch das Austrittsende und den Führungskanal,
- Fig. 8: eine vergrößerte Darstellung des Haltekopfes am Austrittsende im vertikalen Längsschnitt,
- Fig. 9: einen Querschnitt hierzu gemäß Linie IX-IX in Fig. 10,
- Fig. 10: einen Horizontalschnitt hierzu gemäß Linie X-X in Fig. 9,
- Fig. 11: einen Querschnitt durch das Profil des Führungskanals gemäß Linie XI-XI in Fig. 7,
- Fig. 12 und 13: die Arbeitsfolge beim Setzen einer erfindungsgemäßen Blechmutter,
- Fig. 14: eine andere Ausführungsform der erfindungsgemäßen Blechmutter in einer vergrößerten Seitenansicht,
- Fig. 15: die gleiche Blechmutter in Vorderansicht und
- Fig. 16: die gleiche Blechmutter in Draufsicht.

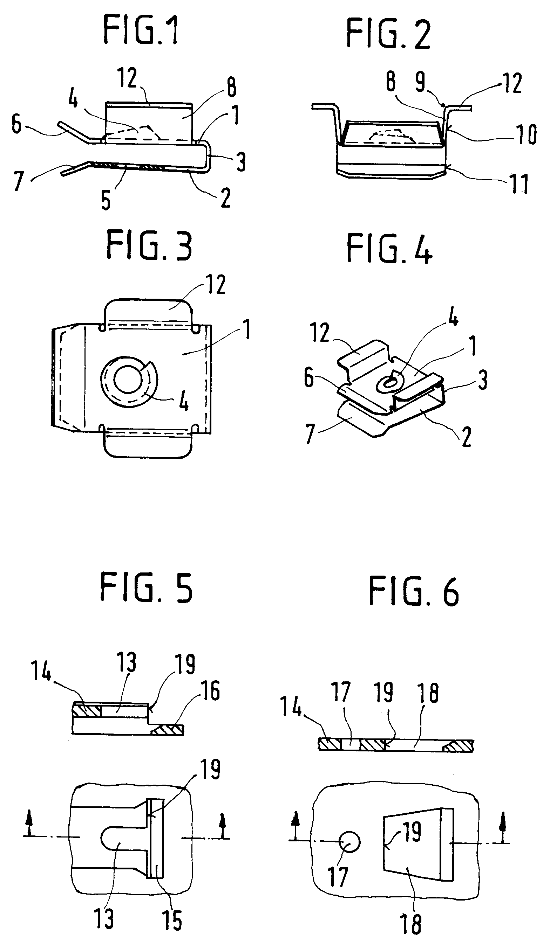

Die in den Fig. 1 - 4 dargestellte Blechmutter besteht aus einem Gewindeschenkel 1 und einem mit diesem über einen Quersteg 3 verbundenen Klammerschenkel 2. Der Gewindeschenkel 1 hat in der Mitte eine Gewindeprägung 4 und der Klammerschenkel 2 ist genau unter dieser Gewindeprägung 4 mit einem Durchgangsloch 5 versehen. Beide Schenkel 1 und 2 verlaufen in Richtung ihrer freien Enden zueinander geneigt und weisen an ihren Enden schräg voneinander wegragende Einführplatten 6 und 7 auf.

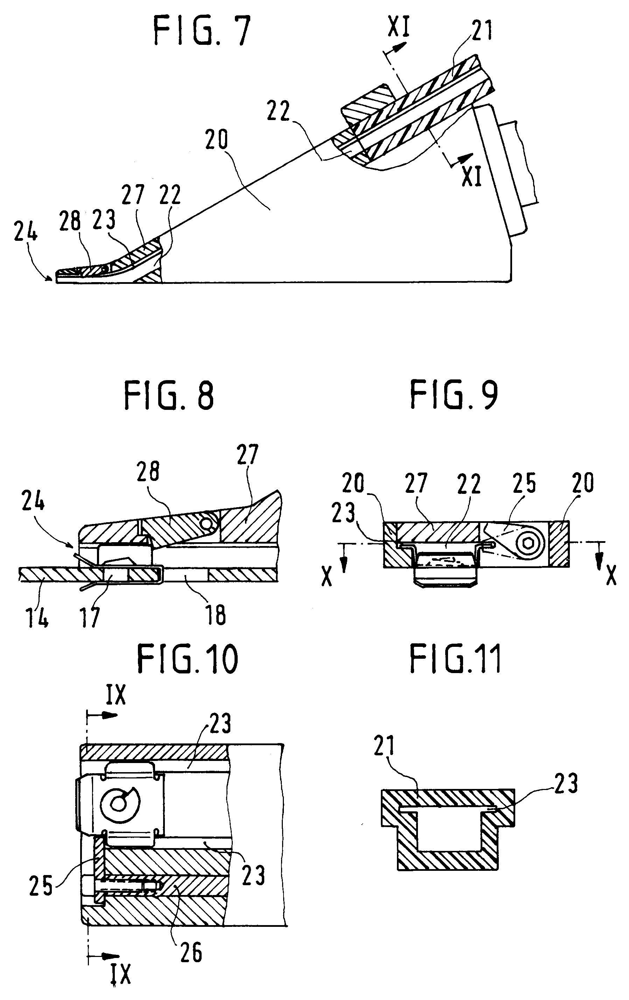

An den beiden Seitenkanten des Gewindeschenkels 1 sind im rechten Winkel zur Schenkelebene Führungsstege 8 angeformt, deren Oberkanten 9 mindestens die Gewindeprägung 4 und die Einführplatte 6 überragen. Die Außenflächen 10 der Führungsstege 8 haben hierbei zweckmäßigerweise den gleichen Abstand voneinander wie die Seitenkanten 11 des Klammerschenkels 2, so daß die Blechmutter in dem noch zu beschreibenden Führungskanal (s. Fig. 9) gut geführt ist. An den Oberkanten 9 der Führungsstege 8 sind überdies noch parallel zur Ebene des Gewindeschenkels 1 Führungsflügel 12 angeformt, mit denen die Blechmutter sicher in den nachfolgend beschriebenen Haltekopf 20 einer Montagevorrichtung gefördert und dort beim Aufdrücken auf eine Befestigungsstelle (Fig. 8) festgehalten werden kann.

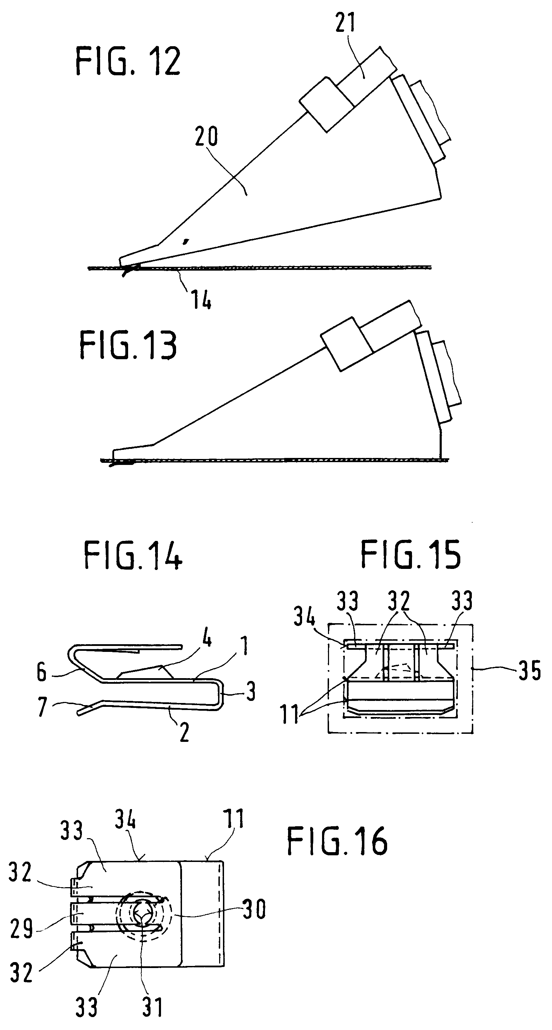

In den Fig. 5 und 6 sind zwei solcher Befestigungsstellen dargestellt, welche nicht am Rand, sondern mitten in einer Gehäusewand liegen und mit einer Blechmutter bestückt werden sollen. Bei Fig. 5 ist die Befestigungsstelle in einer Trägerplatte 14 als nach einer Seite offenes Langloch 13 ausgebildet, vor dem sich eine längliche Aussparung 15 zum Einführen des Klammerschenkels einer Blechmutter befindet. Die anschließende Gehäusewand 16 ist in diesem Fall etwas tiefer gesetzt, damit der Klammerschenkel problemlos eingeführt werden kann. Bei Fig. 6 hingegen befindet sich vor einem Befestigungsloch 17 eine etwas breitere Aussparung 18, welche zum leichteren Einführen des Klammerschenkels trapezförmig zusammenläuft. In beiden Fällen muß die Blechmutter beim Setzen schräg von oben eingeführt (vgl. Fig. 12) und dann waagerecht an den Rand 19 vor dem Befestigungsloch 13, bzw. 17, angedrückt werden (vgl. Fig. 13).

Figur 7 zeigt einen zum automatischen Setzen der erfindungsgemäßen Blechmutter besonders geeigneten Haltekopf 20 einer nicht dargestellten Montagevorrichtung. Die Blechmuttern werden hierbei über einen flexiblen Führungsschlauch 21 mit einem dem Umriß der Blechmutter entsprechenden Profilquerschnitt (Fig. 11) herangeführt und im Haltekopf 20 an einen Führungskanal 22 vom gleichen Profilquerschnitt übergeben, wobei in den oberen Ecken des Führungsschlauches 21 - wie auch des Führungskanals 22 -Führungsrillen 23 zum Durchgleiten der Führungsflügel 12 vorgesehen sind. Dieser Führungskanal 22 wird mit seinen Führungsrillen 23 schräg von oben an das Austrittsende 24 des Haltekopfes 20 herangeführt und dann in die horizontale Austrittsrichtung in einem leichten Bogen umgelenkt, wobei der Führungskanal 22 am Austrittsende 24 nach unten offen ist. Dort wird die herangeführte Blechmutter durch nachfolgend beschriebene Mittel gestoppt und festgehalten, wobei der Klammerschenkel 2 der Blechmutter frei nach unten heraushängt. In dieser Lage kann die Blechmutter, wie in Fig. 12 und 13 anschaulich dargestellt, mit dem Haltekopf 20 in die Montageaussparung 18 der Trägerplatte 14 schräg eingeführt und dann waagerecht bis in die Befestigungsposition vorgedrückt werden. Sodann kann der Haltekopf 20 nach Lösen der Stoppmittel rückwärts herausgezogen und mit einer neuen Blechmutter für die nächste Befestigungsstelle bestückt werden.

Wie die herangeführte Blechmutter am Austrittsende 24 gestoppt und festgehalten wird, ist aus den Figuren 8 bis 10 ersichtlich. Das Stoppen geschieht durch einen am Ende des Führungskanals 22 seitlich davon angeordneten Sperriegel 25, welcher auf einer drehbaren Achse 26 gelagert ist und zum Schließen der Austrittsöffnung in die Führungsrille 23 eingeschwenkt wird. Nach dem Setzen der Blechmutter wird dieser Sperriegel 25 hochgeschwenkt und gibt dabei den Weg für die Führungsflügel 12 wieder frei, so daß der Haltekopf 20 ungehindert zurückgezogen werden kann.

Zum Festhalten der eingeführten Blechmutter ist ferner in der oberen Querwand 27 des Führungskanals 22 eine um eine horizontale Querachse schwenkbar gelagerte Sperrklinke 28 vorgesehen. Diese Sperrklinke 28 wird von der herangeführten Blechmutter zunächst hochgeschwenkt und fällt, sobald die Blechmutter am Sperriegel 25 anschlägt, wieder in ihre Sperrlage hinunter, so daß die Blechmutter nach hinten abgestützt ist, wenn diese vom Haltekopf 20 in die Befestigungsstelle eingeschoben wird (Fig. 12 u. 13).

In den Fig. 14 bis 16 ist eine andere Ausführungsform der erfindungsgemäßen Blechmutter dargestellt, bei welcher am oberen Ende der Einführplatte 6 ein zur Gewindeprägung 4 hin C-förmig herumgebogener Sicherungsschenkel 29/30 angeformt ist. Dieser ist, wie in der DE-OS 35 36 473 näher erläutert, mit bogenförmigen Klemmkanten 31 versehen, welche zur Sicherung des Gewindeschaftes einer eingedrehten Schraube bestimmt sind.

Bei dieser Blechmutter sind an den an den Klemmkanten 31 vorbeiführenden Außenstegen 32 des Sicherungsschenkels 30 zwei Führungsflügel 33 angeformt, deren Außenkanten 34 parallel zueinander verlaufen und zweckmäßigerweise den gleichen Abstand voneinander haben wie die Seitenkanten 11 des Gewindeschenkels 1 beziehungsweise des Klammerschenkels 2.

Diese Ausbildung der Führungsschenkel 33 hat den großen Vorteil, daß während der Anförderung der Blechmuttern die Führungsrillen 23 entfallen können, so daß der hierfür vorgesehene flexible Führungsschlauch 35, wie in Fig. 15 strichpunktiert angedeutet, mit einem rechteckigen Profilquerschnitt ausgebildet sein kann. Dadurch wird der Schlauch 35 in der Herstellung einfacher und zudem gegen Verbiegen unempfindlicher. Die Führungsrillen 23 werden praktisch erst im unteren Teil des Haltekopfes 20 vom Bereich vor der Umlenkung ab benötigt, um die Blechmuttern hängend an die Austrittsstelle 24 heranzuführen. Außerdem ergibt sich bei dieser Ausführungsform eine bedeutende Materialersparnis gegenüber der erstbeschriebenen Ausführungsform, bei der wegen der seitlich hoch- bzw. abstehenden Führungsstege 8 und Führungsflügel 12 ein entsprechend breiter Blechstreifen für die Herstellung der Blechmuttern benötigt wird und daher auch in der fortlaufenden Produktion entsprechend breite Stanzabfallstreifen anfallen.

## Patentansprüche

1. Klammerartige Blechmutter zur automatischen Montage auf einer Trägerplatte, bestehend aus einem eine Gewindeprägung (4) aufweisenden Gewindeschenkel (1) und einem mit diesem über einen Quersteg (3) verbundenen Klammerschenkel (2), welcher mit einem Schrauben-Durchgangsloch (5) versehen ist, wobei beide Schenkel (1, 2) in Richtung ihrer freien Enden zueinander geneigt verlaufen und das freie Ende des Gewindeschenkels (1) eine vom Klammerschenkel (2) schräg wegragende Einführplatte (6) aufweist,
**dadurch gekennzeichnet,** daß an einem der beiden Schenkel (1 oder 2) seitlich nach außen abstehende Führungsflügel (12) angeformt sind, wobei deren Randbereiche abgerundet sind.

2. Klammerartige Blechmutter nach Anspruch 1, wobei an den beiden Seitenkanten des Gewindeschenkels (1) im rechten Winkel zur Schenkelebene Führungsstege (8) angeformt sind, deren Oberkanten (9) mindestens die Gewindeprägung (4) und die Einführplatte (6) überragen und deren Außenflächen (10) den gleichen Abstand voneinander haben wie die Seitenkanten (11) des Klammerschenkels (2),
**dadurch gekennzeichnet,** daß die Führungsflügel (12) an den Oberkanten (9) der Führungsstege (8) parallel zur Ebene des Gewindeschenkels (1) angeformt sind.

3. Klammerartige Blechmutter nach Anspruch 1, wobei an dem oberen Ende der Einführplatte ein zur Gewindeprägung hin C-förmig herumgebogener Sicherungsschenkel (29/30) mit bogenförmigen Klemmkanten (31) zur Sicherung des eingedrehten Schraubengewindes angeformt ist,
**dadurch gekennzeichnet,** daß die Führungsflügel (33) an den Außenstegen (32) des Sicherungsschenkels (30) angeformt sind.

4. Klammerartige Blechmutter nach Anspruch 3,
**dadurch gekennzeichnet,** daß die Außenkanten (34) der Führungsflügel (33) parallel zueinander verlaufen und den gleichen Abstand haben wie die Seitenkanten (11) des Gewindeschenkels (1) beziehungsweise des Klammerschenkels (2).

## Claims

1. A clip-type sheet metal nut for automatic mounting on a carrier panel, comprising a screwthread limb (1) having a screwthread impression (4) and a clipping limb (2) which is connected to the screwthread limb (1) by way of a transverse web portion (3) and which is provided with a hole (5) for a screw to pass therethrough, wherein both limbs (1, 2) extend inclinedly towards each other in the direction of their free ends and the free end of the screwthread limb (1) has an introduction plate (6) which projects inclinedly away from clipping limb (2), characterised in that formed on one of the two limbs (1 or 2) are laterally outwardly projecting guide wings (12), wherein the edge regions thereof are rounded off.

2. A clip-type sheet metal nut according to claim 1 wherein guide webs (8) are formed at the two side edges of the screwthread limb (1) at a right angle to the plane of the limb, the upper edges (9) of the guide webs projecting beyond at least the screwthread impression (4) and the introduction plate (6) and the outside surfaces (10) thereof being at the same spacing from each other as the side edges (11) of the clipping limb (2), characterised in that the guide wings (12) are formed at the upper edges (9) of the guide webs (8) parallel to the plane of the screwthread limb (1).

3. A clip-type sheet metal nut according to claim 1 wherein formed at the upper end of the introduction plate is a securing limb (29/30) which is bent over in a C-shape towards the screwthread impression and with arcuate clamping edges (31) for securing the screw thread which is screwed in, characterised in that the guide wings (33) are formed at the outer webs (32) of the securing limb (30).

4. A clip-type sheet metal nut according to claim 3 characterised in that the outer edges (34) of the guide wings (33) extend parallel to each other and are at the same spacing as the side edges (11) of the screwthread limb (1) or the clipping limb (2).

## Revendications

1. Ecrou à agrafage pour vis Parker pour pose en automatique sur une plaque support, se composant d'une patte formant filetage (1) munie d'une empreinte de filetage (4) et d'une patte d'agrafage (2) reliée à la première par une barrette entretoise transversale (3), qui comporte un trou pour le passage d'une vis (5), ces deux pattes (1) et (2) se rapprochant en l'occurrence l'une de l'autre dans la direction de leurs extrémités libres, et l'extrémité libre de la patte formant filetage (1) comportant en l'occurrence une plaquette d'introduction (6) qui s'écarte de la patte d'agrafage (2) suivant une orientation oblique, **se caractérisant par le fait** qu'une des deux pattes (1) et (2) comporte, réalisées solidaires par formage, des ailettes de guidage (12) faisant saillie vers l'extérieur et dont les bords sont arrondis.

2. Ecrou à agrafage pour vis Parker suivant la revendication 1, comportant des barrettes de guidage (8) réalisées solidaires par formage, suivant une disposition à angle droit par rapport au plan de la patte, des deux bords latéraux de la patte formant filetage (1), barrettes dont les arêtes supérieures (9) dépassent au moins l'amorce de filetage (4) et la plaquette d'introduction (6) et dont les surfaces extérieures (10) sont respectivement séparées par le même intervalle d'écartement que les arêtes latérales (11) de la patte d'agrafage (2), **se caractérisant par le fait** que les ailettes de guidage (12) sont réalisées solidaires par formage des arêtes supérieures (9) des barrettes de guidage (8) suivant une disposition parallèle au plan de la patte formant filetage (1).

3. Ecrou à agrafage pour vis Parker suivant la revendication 1, comportant, solidaire par formage de l'extrémité supérieure de la plaquette d'introduction, une patte de retenue (29/30) repliée en forme de C en direction de l'empreinte de filetage, munie d'arêtes de serrage cintrées (31) pour immobiliser en position le filetage de la vis introduite dans l'écrou, **se caractérisant par le fait** que les ailettes de guidage (33) sont réalisées solidaires par formage des barrettes extérieures (32) de la patte de retenue (30).

4. Ecrou à agrafage pour vis Parker suivant la revendication 3, **se caractérisant par le fait** que les arêtes extérieures (34) des ailettes de guidage (33) sont respectivement parallèles et présentent le même intervalle d'écartement que les arêtes latérales (11) de la patte formant filetage (1) et de la patte d'agrafage (2).
